Europäisches Patentamt

European Patent Office

Office européen des brevets

(19)

(11) Numéro de publication: **0 011 548**
**B1**

(12)

# FASCICULE DE BREVET EUROPEEN

(45) Date de publication du fascicule du brevet:
15.06.83

(51) Int. Cl.³: **G 01 B 3/04**, B 27 G 5/02

(21) Numéro de dépôt: **79400829.2**

(22) Date de dépôt: **07.11.79**

(54) Dispositif de mesure, notamment pour la coupe de baguettes à onglets et tronçonneuse équipée d'un tel dispositif.

(30) Priorité: **08.11.78 FR 7831536**

(43) Date de publication de la demande:
**28.05.80 Bulletin 80/11**

(45) Mention de la délivrance du brevet:
**15.06.83 Bulletin 83/24**

(84) Etats contractants désignés:
**AT BE CH DE GB IT LU NL SE**

(56) Documents cités:
**US-A-3 374 545**
**US-A-3 854 360**
**US-A-3 901 498**
**US-A-4 123 955**

(73) Titulaire: **Cassese, Antoine, Les Essarts No 7 Saint
Germain Laxis, F-77950 Maincy (FR)**

(72) Inventeur: **Cassese, Antoine, Les Essarts No 7 Saint
Germain Laxis, F-77950 Maincy (FR)**

(74) Mandataire: **Akerman, Casimir et al, Cabinet Casanova
et Akerman 23 boulevard de Strasbourg, F-75010 Paris
(FR)**

BUNDESDRUCKEREI BERLIN

## Dispositif de mesure, notamment pour la coupe de baguettes à onglets et tronçonneuse équipée d'un tel dispositif

La présente invention a pour objet un dispositif de mesure, notamment pour la coupe de baguettes à onglets destinées en particulier mais non exclusivement à constituer un cadre.

On sait que pour former un cadre, il est habituellement nécessaire de couper à des dimensions bien déterminées les baguettes présentant des extrémités coupées à 45° permettant un assemblage en onglets à chaque angle du cadre. Il existe des tronçonneuses permettant de réaliser la coupe simultanée de deux onglets à 45°.

Malheureusement, au cours de la fabrication d'un cadre les seules dimensions qui soient aisément accessibles sont les dimensions extérieures de l'objet à encadrer tel qu'un tableau, par exemple. On sait que le tableau doit venir prendre appui contre la feuillure du cadre (voire de la marie-louise) et la relation entre les dimensions de la feuillure et les dimensions extérieures du cadre n'est pas immédiatement accessible. En effet, les largeurs des baguettes utilisées varient d'un cadre à l'autre et il n'est pas possible pour procéder à la coupe de se repérer sur le bord extérieur du cadre.

Actuellement, il est donc nécessaire de procéder à un tracé au crayon, tracé qui est toujours plus ou moins précis avant de procéder à la coupe proprement dite. Ces opérations sont longues et nécessitent beaucoup de soin et d'habileté.

Le brevet américain US-A-3 854 360 décrit un dispositif pour couper des moulures destinées à encadrer les éléments constituant un meuble. Dans ce brevet, la pièce sur laquelle on désire poser la moulure est utilisée comme référence. On est ainsi assuré que la plus petite dimension de l'onglet qui est découpé coïncide exactement avec la dimension correspondante de la pièce.

Malheureusement, l'amenée de la pièce sur la table de travail est assez souvent impossible pour des raisons pratiques.

Le document US-A-4 123 955 est relatif à un dispositif pour couper des baguettes en onglets en vue de former un cadre de tableau. Ce dispositif est placé sur une table de travail comportant une encoche pour permettre le passage d'un outil de coupe. Il comporte deux ensembles qui sont disposés à 45° de part et d'autre de cette encoche, qui comprennent chacun un tasseau, contre lequel est maintenue la baguette, et dont un seulement est muni d'une règle graduée dont l'origine de la graduation est située sur le bord de l'encoche. On peut remarquer qu'un des inconvénients d'un tel dispositif est que la fixation simultanée en position de mesure et de travail est impossible.

La présente invention a notamment pour objet de pallier les quelques inconvénients énumérés ci-dessus. Selon la présente invention, le dispositif de mesure pour la coupe de baguettes à onglets, destiné à être monté sur une table de travail sur laquelle est fixé un tasseau s'étendant selon une direction longitudinale, comporte au moins une encoche en V pour permettre le passage de deux outils de coupe inclinés par rapport à cette direction longitudinale, des butées permettant de maintenir en position une baguette à couper et une règle graduée dont l'origine de la graduation est située sur le bord de cette encoche. Cette règle graduée est montée coulissante dans un plan parallèle à la table de travail et se déplace selon une direction formant un angle de 45° par rapport à la direction longitudinale, l'extrémité de cette règle graduée est biseautée selon un angle de 45°, de manière à pouvoir glisser le long de la butée mobile permettant de presser la baguette contre le tasseau.

De préférence, la règle graduée précitée est fixée sur les branches d'une équerre, dont une des branches est par ailleurs solidaire d'un support coulissant sur une glissière.

Avantageusement, cette, glissière forme un angle de 45° par rapport à la direction longitudinale.

De préférence, le tasseau longitudinal est disposé du côté de l'opérateur et en avant de l'encoche en V.

La présente invention concerne également une tronçonneuse pour la coupe de baguettes qui est équipée d'un dispositif de mesure tel que décrit ci-dessus.

On a ainsi la possibilité de porter directement à l'intérieur de la feuillure la seule mesure que l'on connaisse, c'est-à-dire l'une des dimensions extérieures de l'objet à encadrer.

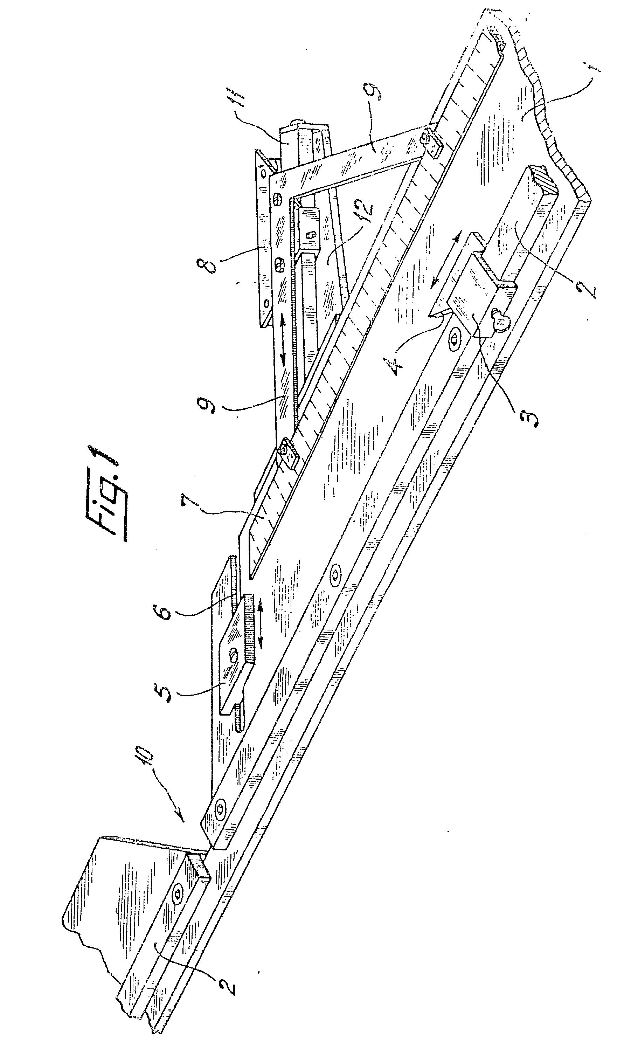

D'autres caractéristiques et avantages de l'invention apparaîtront au cours de la description qui va suivre d'un mode de réalisation particulier donné à titre d'exemple non limitatif, en regard des figures 1 à 3 qui représentent le positionnement des différents éléments constituant le dispositif au cours d'une opération de coupe.

Sur la figure 1, on voit que le dispositif est monté sur la table 1 d'une tronçonneuse de type connu dans laquelle deux lames de scie circulaire perpendiculaires permettant la coupe simultanée de deux onglets au niveau de l'ouverture 10. Sur les tronçonneuses connues, sont généralement disposés des tasseaux 2 contre lesquels peut venir s'appliquer ce qui sera le bord extérieur du cadre, une butée mobile 3 présentant une semelle 4 reposant sur la table permettant de bloquer la baguette dans une position déterminée. Une seconde butée 5 permet de presser, pendant l'opération de coupe, la baguette contre le tasseau 2, de manière à l'immobiliser. Comme connu en soi, cette butée coulisse dans une rainure 6 parallèle à l'un des bords de l'ouverture 10. Le dispositif selon l'invention comprend essentiellement une règle graduée 7 montée coulissante grâce à un premier support 8 sur lequel elle est assujettie, au moyen d'une équerre 9 sur une glissière 11. La glissière 11 est elle-même solidarisée au bâti de la machine par un second support 12. Sur la figure 1, ces différents éléments sont représentés en position de repos, c'est-à-dire que la règle graduée est éloignée du tasseau 2, ce qui permet le passage d'une baguette entre ledit tasseau et la règle.

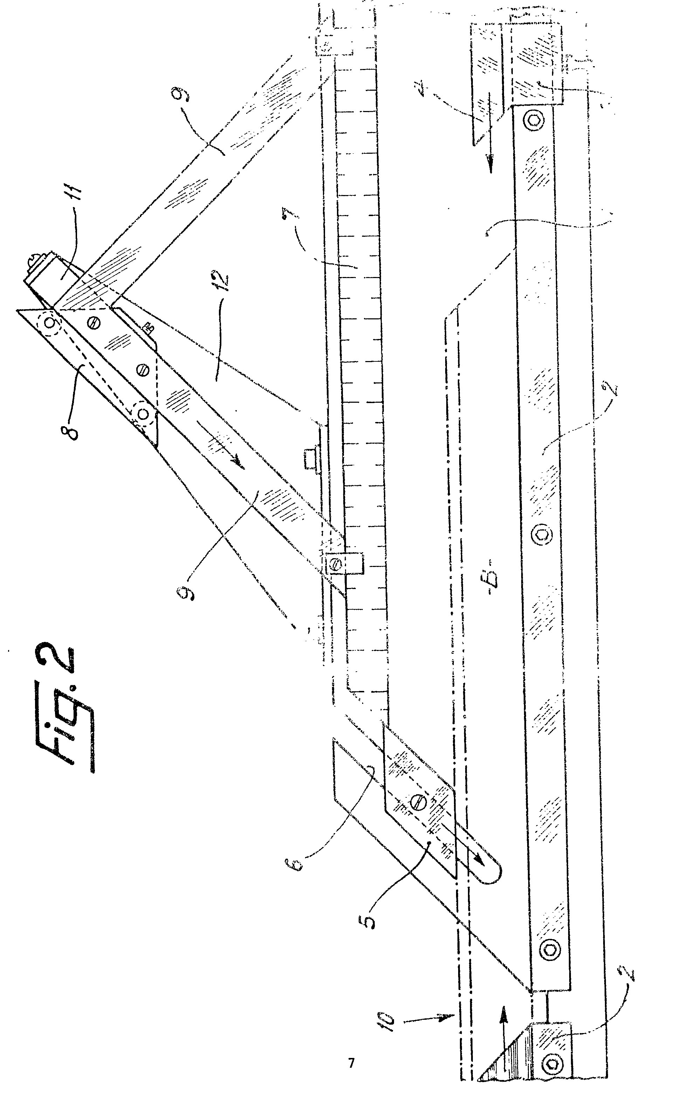

Comme cela apparaît sur la figure 2, et après tronçonnage d'une extrémité de la baguette B en 10, cette baguette est glissée le long du tasseau 2 jusqu'à ce qu'elle vienne buter contre la semelle 4 de la butée mobile 3 qui, à ce moment, n'est pas encore bloquée.

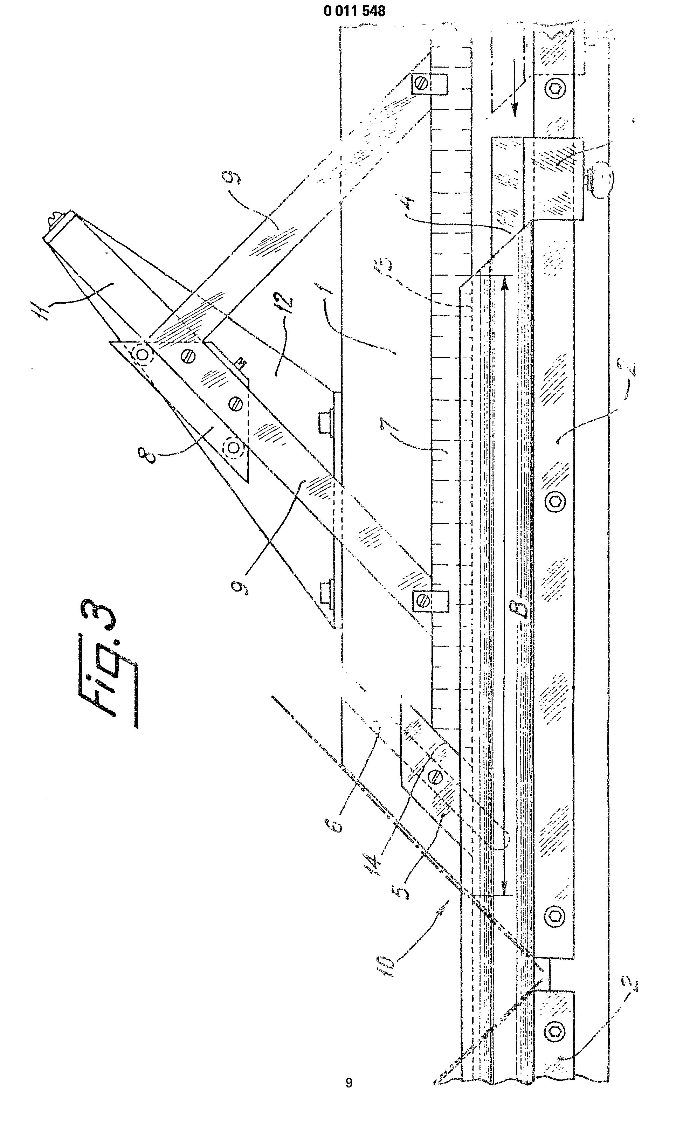

Comme cela apparaît sur la figure 3, la règle graduée 7 est alors poussée vers l'avant de manière que son extrémité avant vienne en contact avec la feuillure 13 de la plaquette. On remarquera que le bord gauche 14 de la règle 7 est biseauté de manière à pouvoir glisser contre la butée 5. On notera également que contrairement à ce qui se passe habituellement, la graduation de la règle 7 ne commence pas à 0, mais à une valeur correspondant à la distance entre le bord avant 14 de la règle et le bord de l'ouverture de coupe 10. A ce moment, la longueur de feuillure nécessaire est déterminée par coulissement de la baguette le long du côté de la règle graduée, de manière que la feuillure ait exactement la dimension requise pour épouser parfaitement le bord de l'objet à encadrer, puis la butée 3 est amenée contre l'onglet de la baguette pour maintenir celle-ci dans la position choisie et la butée 5 prend appui à l'intérieur de la feuillure pour maintenir le bord extérieur de la baguette B contre le tasseau 2. L'opération de tronçonnage peut alors être effectuée selon les lignes qui sont représentées en traits mixtes forts sur la figure 3. Lorsque l'on a une grande série de cadres de même dimension à effectuer, la règle graduée est alors reculée sur sa glissière et la position de la butée 3 permet d'assurer la régularité des dimensions coupées.

Sur les tronçonneuses existantes, le tasseau 2 est habituellement placé sur le bord extérieur de la table de travail, c'est-à-dire du côté opposé à l'opérateur. En conservant cette disposition, le dispositif de mesure serait placé également du côté de l'opérateur, ce qui entraînerait une gêne pour celui-ci. De plus, les coupes obtenues dans ces conditions ne seraient pas aussi nettes, car il y a risque d'éclatement, surtout pour les baguettes blanchies. En effet, le dégagement des dents de la scie se ferait dans le dos de la baguette. Aussi, selon l'une des caractéristiques de l'invention, le tasseau 2 est disposé sur le côté de la table de travail situé du côté de l'opérateur.

La présente invention permet ainsi aux encadreurs de réaliser leur coupe aux endroits voulus en fonction du seul paramètre de la dimension interne de la feuillure. Le dispositif selon l'invention peut être monté très aisément même sur les tronçonneuses déjà en service.

Il va de soi que des modifications peuvent être apportées au mode de réalisation qui vient d'être décrit, notamment par substitution de moyens techniques équivalents, sans sortir pour cela du cadre de l'invention.

**Revendications**

1. Dispositif de mesure notamment pour la coupe de baguettes à onglets, destiné à être monté sur une table de travail (1) sur laquelle est fixé un tasseau (2) s'étendant selon une direction longitudinale, et qui comporte au moins une encoche (10) en V pour permettre le passage de deux outils de coupe inclinés par rapport à ladite direction longitudinale, des butées (3, 5) permettant de maintenir en position une baguette à couper et une règle graduée (7) dont l'origine de la graduation est située sur le bord de ladite encoche, ledit dispositif étant caractérisé en ce que ladite règle graduée est montée coulissante dans un plan parallèle à la table de travail et se déplace selon une direction formant un angle de 45° par rapport à ladite direction longitudinale, et en ce que l'extrémité (14) de ladite règle graduée (7) est biseautée selon un angle de 45°, de manière à pouvoir glisser le long de la butée mobile (5) permettant de presser ladite baguette contre ledit tasseau (2).

2. Dispositif selon la revendication 1, caractérisé en ce que ladite règle graduée (7) précitée est fixée sur les branches d'une équerre (9), dont une des branches est par ailleurs solidaire d'un support (8) coulissant sur une glissière (11).

3. Dispositif selon la revendication 2, caractérisé en ce que ladite glissière (11) forme un angle de 45° par rapport à ladite direction longitudinale.

4. Dispositif selon l'une quelconque des revendications 1 à 3, caractérisé en ce que ledit tasseau longitudinal (2) est disposé du côté de l'opérateur et en avant de l'encoche en V (10).

5. Tronçonneuse pour la coupe de baguettes, caractérisé en ce qu'elle est équipée d'un dispositif de mesure selon l'une quelconque des revendications précédentes.

**Patentansprüche**

1. Meßvorrichtung, besonders zum Trennen von Leisten auf Gehrung, die zur Montage auf einem Arbeitstisch (1) bestimmt ist, auf dem eine in Längsrichtung laufende Unterlage (2) befestigt ist und der zumindest eine V-förmige Ausnehmung (10) für das Durchlassen zweier gegenüber dieser Längsrichtung schrägstehender Trennwerkzeuge aufweist, der außerdem Anschläge (3, 5) um eine durchzutrennende Leiste in Position zu halten und ein Maßlineal (7) aufweist, bei dem der Nullpunkt der Maßeinteilung am Rand der genannten Ausnehmung liegt, dadurch gekennzeichnet, daß das Maßlineal (7) in einer zum Arbeitstisch (1) parallelen Ebene verschiebbar geführt ist und sich unter einem Winkel von 45° gegenüber der genannten Längsrichtung verschieben läßt und daß das Ende (14) des Maßlineales (7) unter einem Winkel von 45° abgeschrägt ist, so daß es längs des verschiebbaren Anschlages (5) verschiebbar ist und das Anpressen der Leiste gegen die genannte Unterlage (2) gestattet.

2. Vorrichtung nach Anspruch 1, dadurch gekennzeichnet, daß das vorerwähnte Meßlineal (7) auf den Schenkeln eines Winkels (9) befestigt ist, wobei einer der Schenkel mit einem Träger (8) verbunden ist, der verschiebbar auf einer Gleitbahn (11) geführt ist.

3. Vorrichtung nach Anspruch 2, dadurch gekennzeichnet, daß die genannte Gleitbahn (11) einen Winkel von 45° gegenüber der vorgenannten Längsrichtung bildet.

4. Vorrichtung nach einem der Patentansprüche 1 bis 3, dadurch gekennzeichnet, daß die genannte, in Längsrichtung laufende Unterlage (2) an der Seite zur Bedienungsperson hin und vor der V-förmigen Ausnehmung (10) angeordnet ist.

5. Trennvorrichtung zum Durchtrennen von Leisten, dadurch gekennzeichnet, daß sie mit einer Meßvorrichtung gemäß einem der vorhergehenden Ansprüche ausgerüstet ist.

**Claims**

1. A measuring device, more particularly for the cutting of mitred battens, said device being adapted for mounting on a work table (1) on which there is fixed a ledge (2) extending ongitudinally and having at least one V-shaped slot (10) to allow the passage of two cutting tools which are inclined with respect to the longitudinal direction, abutments (3, 5) whereby a batten for cutting can be held in position, and a graduated rule (7), the start of the graduation of which is situated at the edge of said slot, the said device being characterised in that the said graduated rule is mounted to slide in a plane parallel to the work table and moves in a direction which forms an angle of 45° with respect to the said longitudinal direction, and in that the end (14) of said graduated rule (7) is bevelled to an angle of 45° so as to be slidable along the movable abutment (5) enabling said batten to be pressed against said ledge (2).

2. A device according to claim 1, characterised in that the said graduated rule (7) is fixed on the arms of a set square (9), one of the arms of which is secured to a support (8) sliding on a guide (11).

3. A device according to claim 2, characterised in that the said guide (11) forms an angle of 45° with respect to the said longitudinal direction.

4. A device according to any one of claims 1 to 3, characterised in that the said longitudinal ledge (2) is disposed on the operator's siede and in front of the V-shaped slot (10).

5. Cutting machine for cutting battens, characterised in that it is provided with a measuring device according to any one of the preceding claims.

_Fig.1_

Fig. 3

0 011 548